# EUROPEAN PATENT APPLICATION

(11) **EP 2 393 168 A2**
(43) Date of publication of application: **07.12.2011**
(21) Application number: 11004105.0
(22) Date of filing: 18.05.2011
(51) Int. Cl.: H01R 13/66, H01R 13/70, H01R 25/00

(54) **Control circuit of power-saving socket**

(30) Priority: 04.06.2010 TW 099118227
(71) Applicant: Prodigit Electronics Co., Ltd., Sindian City, Taipei County 231 (TW)
(72) Inventor: Liu, Ying-Chang, Sindian City Taipey County 231 R.O.C. (TW)
(74) Representative: Marsh, Robin Geoffrey

(57) **Abstract**

A control circuit is provided for a power-saving socket and includes a central processing unit, a relay, a sensor unit, a time counting unit, a standby current setting unit, and a current monitoring unit. The central processing unit, upon receiving a human approaching signal from the sensor unit, issues a control signal to the relay to switch a contact of the relay to a closed condition, whereby an electrical appliance plugged to the socket is allowed to operate. When the electrical appliance plugged to the socket stays in a standby mode, the central processing unit receives a current value from the current monitoring unit, which is equal to or smaller than an appliance standby current level, and the time counting unit starts time counting for a specific period of time. Once the detected current value from the current monitoring unit maintains equal to or smaller than the appliance standby current level within the whole specific period of time, the central processing issues a control signal to the relay to switch the contact of the relay to an open condition, whereby power supplied to the electrical appliance plugged to the socket is completely cut off and the electrical appliance consumes no standby power. In this way, power saving can be achieved.

## Description

### FIELD OF THE INVENTION

The present invention relates to a control circuit of socket, and in particular to a control circuit of a power-saving socket.

### BACKGROUND OF THE INVENTION

Wall receptacle sockets of a building or sockets of a power cord are supplied with electrical power by being connected to a commercial electric main. Electrical appliances may be plugged into the sockets to receive electrical power for normal operation or standby mode.

A regular electrical appliance, such as television set, a hi-fi audio set, or a DVD, is often equipped with a remote control that allows for easy control of the electrical appliance by a user. The remote control equipped electrical appliance must be set in a power on status in order to stay in a standby mode for being effective in receiving a control signal from the remote control. The standby mode of an electrical appliance, however, consumes power. Further, other electrical or electronic appliance, such as computers and peripheral devices, including printers and monitors, which usually have no remote control, are automatically set in a standby mode after being shut down and thus consumes standby power.

Users often neglect the situation that the electrical current flowing through sockets to these electrical and electronic appliances is in continuous supply. The amount of power consumed in this condition, although minor, may amount to a large waste of power if these electrical or electronic appliances maintain plugged in the sockets for a long time.

Electrical sockets or receptacles available in the market are sometimes provided with a control device, such as a timer switch, which completely cuts off the supply of electrical power to the electrical or electronic appliances after a long lapse of time. However, the user needs to have many settings for the timer device.

In view of such problems, the present invention aims to provide a solution that overcomes the drawbacks of the existing techniques.

### SUMMARY OF THE INVENTION

In accordance with an aspect, the present invention provides a control circuit of power-saving socket, which is used to control an electrical socket to which an electrical appliance is plugged into and which is connected to a power source. The control circuit comprises a central processing unit; a relay, which is connected to the central processing unit and comprises a contact connected in series between the socket and the power source, the contact being controllable by the relay; a sensor unit, which is connected to the central processing unit and defines a human body detection zone in front thereof for detecting a person in the detection zone to generate a human approaching signal to the central processing unit; a time counting unit, which is connected to the central processing unit; a current monitoring unit, which is connected in series between the socket and the power source to detect an electrical current flowing through the socket, the current monitoring unit being connected to the central processing unit; and a standby current setting unit, which is connected to the central processing unit, the standby current setting unit is to set the standby current level for the connected appliance; wherein when the central processing unit receives the human approaching signal issued from the sensor unit, the central processing unit issues a first control signal to the relay to switch the contact of the relay to a closed condition; and wherein when the central processing unit receives an electrical current value from the current monitoring unit, the central processing unit retrieves the appliance standby current level and determines the electrical current value maintaining equal to or smaller than the appliance standby current level for a specific period of time, the central processing unit issues a second control signal to the relay to switch the contact of the relay to an open condition.

In accordance with another aspect, the present invention provides a control circuit of power-saving socket, which is used to control an electrical socket to which an electrical appliance is plugged into and which is connected to a power source. The control circuit comprises a central processing unit; an additional power source, which supplies electrical power to the central processing unit; a relay, which is connected to the central processing unit and comprises a contact connected in series between the socket and the power source, the contact being controllable by the relay; a sensor unit, which is connected to the central processing unit and defines a human body detection zone in front thereof for detecting a person in the detection zone to generate a human approaching signal to the central processing unit; a current monitoring unit, which is connected in series between the socket and the power source to detect an electrical current flowing through the socket, the current monitoring unit being connected to the central processing unit; and a standby current setting unit, which is connected to the central processing unit, the standby current setting unit storing an appliance standby current level; wherein when the central processing unit receives the human approaching signal issued from the sensor unit, the central processing unit issues a first control signal to the relay to switch the contact of the relay to a closed condition; and wherein when the central processing unit receives an electrical current value from the current monitoring unit, the central processing unit retrieves the appliance standby current level and determines the electrical current value maintaining equal to or smaller than the appliance standby current level for a specific period of time, the central processing unit issues a second control signal to the relay to switch the contact of the relay to an open condition, whereby the electrical appliance connected to the socket does not consume any power and an effect of power saving is achieved.

### SUMMARY OF THE INVENTION

The present invention will be apparent to those skilled in the art by reading the following description of preferred embodiments of the present invention, with reference to the attached drawings, in which:

**Figure 1** is a circuit block diagram of a first embodiment according to the present invention;

**Figure 2** shows an example of operation of the first embodiment of the present invention;

**Figure 3** shows a power cord to which the present invention is embodied;

**Figure 4** shows a stand-alone socket to which the present invention is embodied;

**Figure 5** shows another power cord to which the present invention is embodied;

**Figure 6** shows another stand-alone socket to which the present invention is embodied; and

**Figure 7** is a circuit block diagram of a second embodiment according to the present invention.

### DETAILED DESCRIPTION OF THE PREFERRED EMBODIMENTS

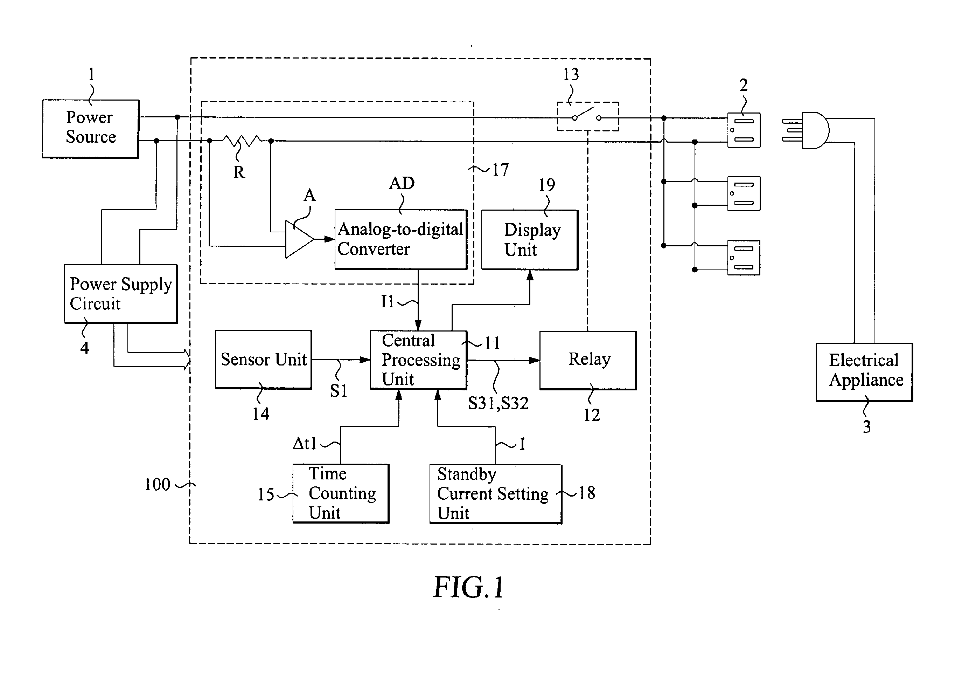

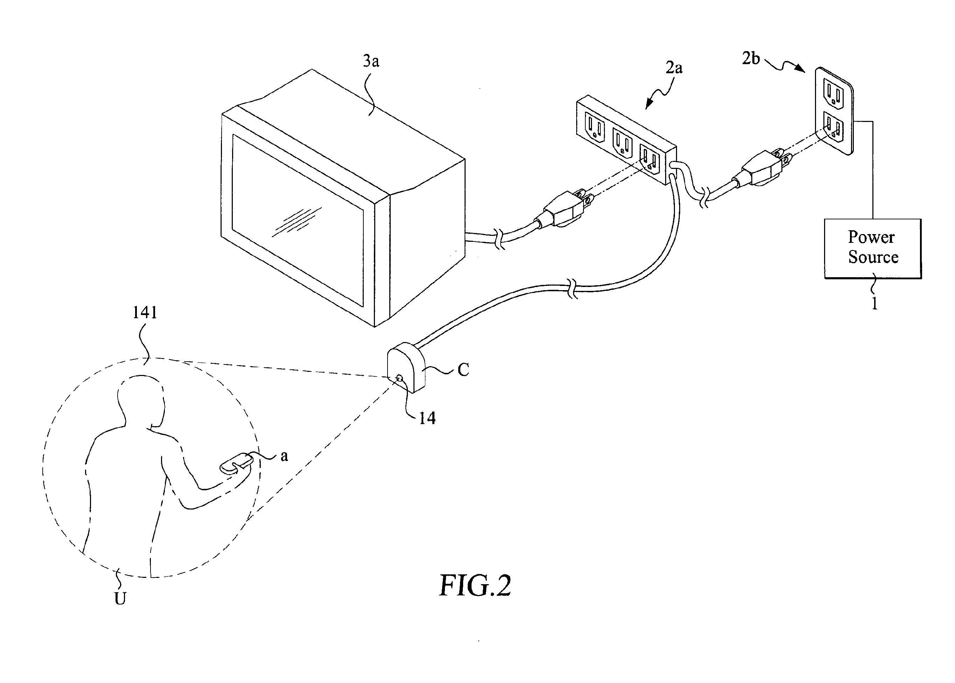

With reference to the drawings and in particular to **Figures 1** and **2**, which are respectively a circuit block diagram of a first embodiment according to the present invention and shows an example of operation of the first embodiment of the present invention, the present invention provides a control circuit **100** for a power-saving socket, which is used to control a socket **2** to which an electrical appliance **3** is plugged. The socket **2** is in connection with a power source **1**. In the embodiment illustrated, the socket **2** is constructed as a socket **2a** of a power cord and receiving the electrical appliance **3** plugged therein. An example of the electrical appliance **3** is a television set **3a** that comprises a remote control. It is apparent to those having ordinary skills that, in other embodiments, the electrical appliance **3** can be an electrical appliance without a remote control, or a copying machine, a computer, a printer, a monitor set up in an office. It is noted here that the socket **2** can be a socket **2a** of a power strip or wall outlet receptacle socket **2b** embedded in a wall.

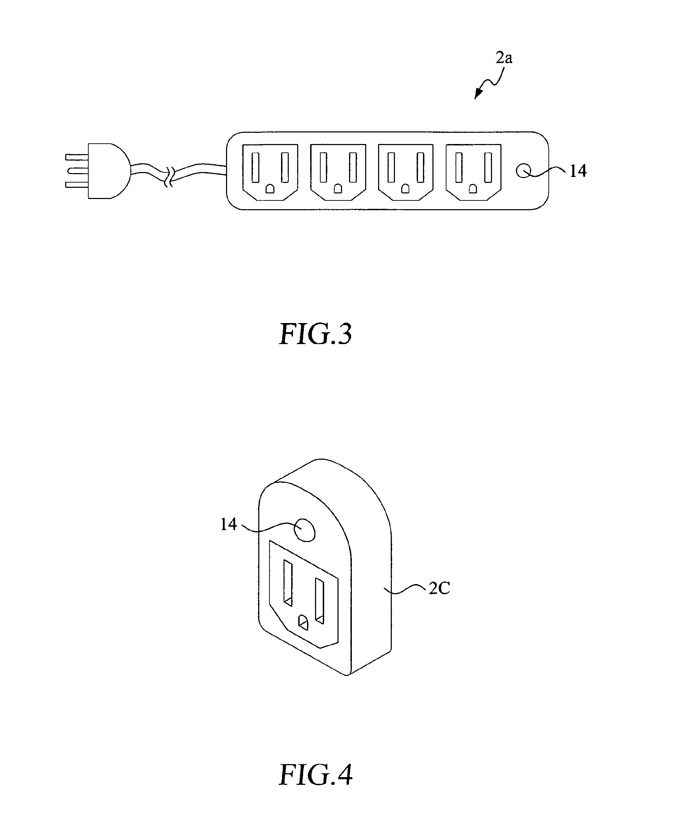

Further, the control circuit **100** is mounted inside a controller C. In the embodiment illustrated, the controller C is connected to a socket **2a** of a power strip. However, it is apparent to those having ordinary skills that, in other embodiments, the control circuit **100** can be simply arranged inside a socket **2a** of a power strip (as shown in **Figure 3****)** or a stand-alone socket **2c** (as shown in **Figure 4****)**. The control circuit **100** of power-saving socket according to the present invention comprises a central processing unit **11,** a relay **12,** a contact **13,** a sensor unit **14,** a time counting unit **15,** a current monitoring unit **17,** a standby current setting unit **18,** and a display unit **19**. The control circuit **100** is operated with electrical power received from a power source **1** through a power supply circuit **4**.

The relay **12** is connected to the central processing unit **11**, but the present invention is not limited to such an arrangement.

The contact **13** is connected, in series, between the socket **2** and the power source **1** and is controlled by the relay **12**. In the embodiment illustrated, the contact **13** forms a normal-open contact of the relay **12**, but the present invention is not limited to such an arrangement.

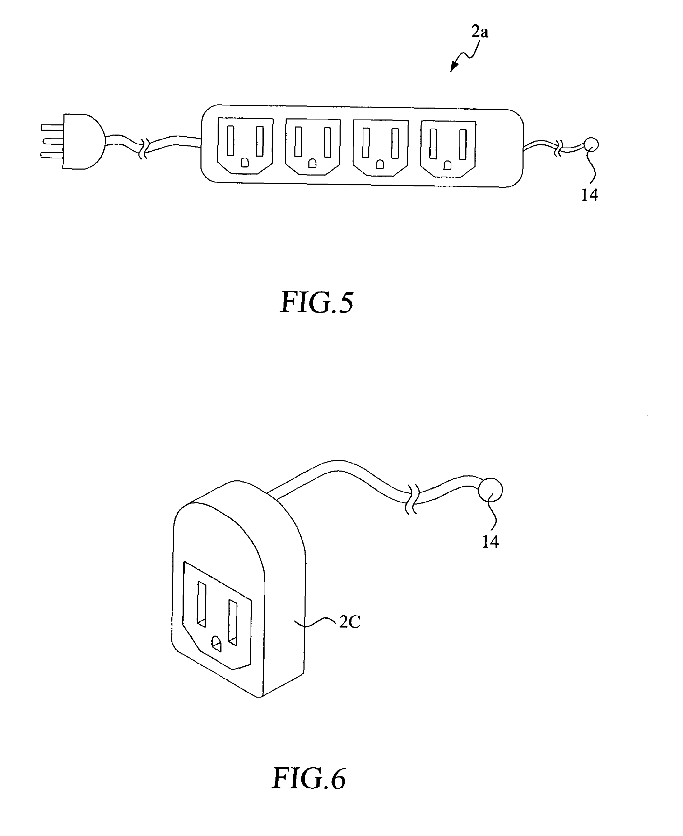

The sensor unit **14** is connected to the central processing unit **11**. The sensor unit **14** defines, in front thereof, a human body detection zone **141**, as shown in **Figure 2**, for detecting a human body entering the detection zone and generating a human approaching signal **S1** that is applied to the central processing unit **11**. In the embodiment illustrated, the sensor unit **14** is set at a location on the controller C as shown in **Figure 2**. Alternatively and being apparent to those having ordinary skills, a pyroelectric passive infrared sensor unit **14** can be mounted to a socket **2a** of a power strip (as shown in **Figure 3****)** or a stand-alone socket **2c** (as shown in **Figure 4****).** Further alternatively, a pyroelectric passive infrared sensor unit **14** can be arranged as being separated from a socket **2a** of a power strip (as shown in **Figure 5****)** or a stand-alone socket 2c (as shown in **Figure 6****)**. Further, the sensor unit **14** can be a pyroelectric passive infrared sensor, a sound detector, an ultrasonic sensor, an image detector, an image temperature detector, or any combination thereof.

The time counting unit **15** is connected to the central processing unit **11**. In the embodiment illustrated, the time counting unit **15** comprises a timer, or alternatively any other equivalent timing device.

The current monitoring unit **17** comprises an electrical resistor R, an operational amplifier **A**, and an analog-to-digital converter **AD**. The electrical resistor **R** is connected in series between the socket **2** and the power source **1**, whereby an electrical current flowing through the electrical resistor R induces a voltage drop across the electrical resistor **R**. This voltage is then amplified by the operational amplifier **A** and converted by the analog-to-digital converter AD into a digital formed current value I1 to be applied to the central processing unit **11**. Further, the current monitoring unit **17** is connected in series between the socket **2** and the power source **1** in order to detect the electrical current flowing through the socket **2**.

The standby current setting unit **18** is connected to the central processing unit **11** for selectively setting an appliance standby current level I. In the embodiment illustrated, the current level set by the standby current setting unit **18** is adjustable through for example a variable resistor or a selection switch, or alternatively, a learning-initiating knob is provided (whereby with the learning-initiating knob being actuated by a user **U,** the central processing unit may acquire, through the current monitoring unit, the standby current flowing through an electrical appliance that is in a standby condition, or alternatively, an automatic setting process is performed so that the central processing unit acquires, with the aid of the current monitoring unit, a minimum current flowing through the socket **2** to an electrical appliance connected thereto, meaning the current monitoring unit **17** detects the electrical current flowing through the socket **2** at the time point when the automatic setting process is carried out).

The display unit **19** is connected to the central processing unit **11** to display for example the numerical value of a specific period of time, the numerical value of another specific period of time, and/or the standby current setting for an electrical appliance. The present invention is not limited to this and for example, the display unit **19** may selectively display the status of the contact **13** set by the relay **12.**

The operation of the control circuit **100** of the power-saving socket **2** according to the instant embodiment will be partially described as follow. Firstly, as shown in **Figure 2**, when a user **U** standing in the detection zone holds a television remote control and watches a television set 3a, the sensor unit **14** detects the human body existing in the detection zone and generates a human approaching signal **S1** to the central processing unit **11**. The central processing unit **11**, when receiving the human approaching signal **S1** from the sensor unit **14**, issues a control signal **S31** to the relay **12**, making the contact **13** closed to an ON-conduction condition, whereby the television set connected to the socket is supplied with electrical power from the power source. The user **U** may then operate the television remote control to tune and watch the television set **3**a.

Another portion of the operation of the control circuit **100** of the power-saving socket will be described as follows. In the embodiment illustrated, for example when the user **U** no longer wishes to watch the television, the user operates the television remote control to shut down the television set **3**a, which then enters a standby mode but with a minor standby current flowing through and consuming an amount of standby power. Under this condition, the central processing unit **11** receives the current value I1 generated from the current monitoring unit **17**, meanwhile, the central processing unit **11** retrieves the setting of appliance standby current level I from the standby current setting unit **1**8. Once the central processing unit **11** determines that the current value I1 for a predetermined specific period of time Δt1 for being equal to or smaller than the appliance standby current level I, the central processing unit **11** issues a control signal **S32** to the relay **12**, making the contact **13** resuming a normal condition of being open. The specific period of time Δt1 is a time period that the time counting unit **15** is operated to count for. In the embodiment illustrated, the specific period of time is set to **10** seconds. However, the present invention is not limited to such a setting, and for example, the specific period of time can be arbitrarily set by a user according to his or her need, such as **30** seconds, **1** minute, and **5** minutes. Within this specific period of time Δt1, the current monitoring unit **17** continuously supplies the current value I1 to the central processing unit **11**, so that power supplied through the socket can be cut off at the time when the electrical appliance **3** enters a standby mode and an effect of power saving can be achieved.

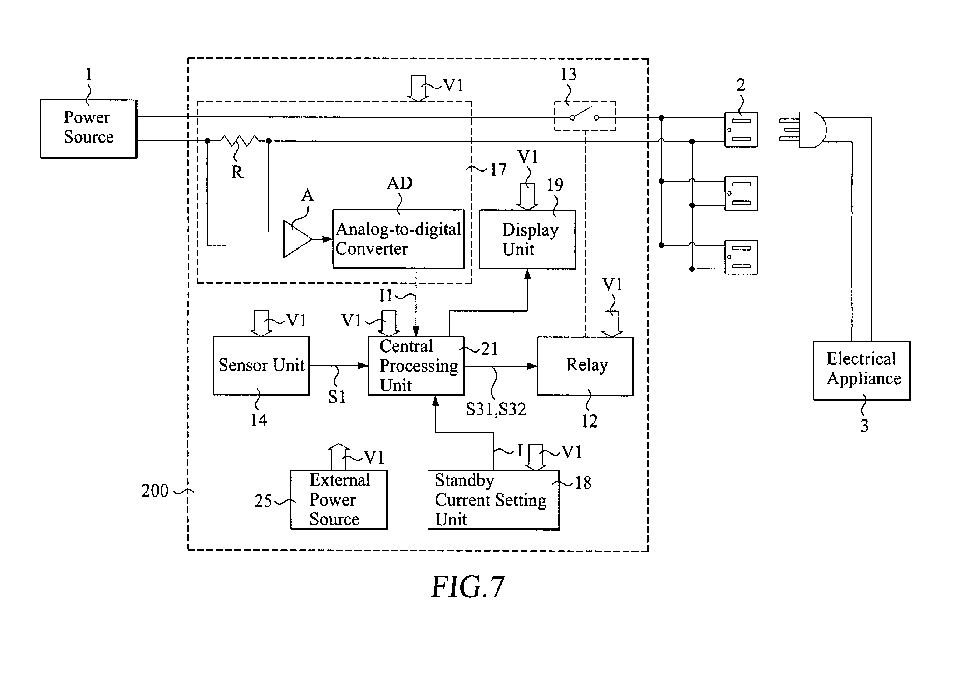

Referring to **Figure 7**, a circuit block diagram of a second embodiment according to the present invention is shown. As shown in **Figure 7**, the second embodiment of the present invention provides a control circuit **200** for a power-saving socket, which is substantially identical to the control circuit **100** of power-saving socket discussed previously with reference to the first embodiment, but a difference resides between the two embodiments in that the control circuit **200** of the second embodiment comprises a central processing unit **21**, which is powered by an external power source **25**. The remaining portion of the control circuit **200** of the second embodiment is identical to the counterpart part of the control circuit **100** of the first embodiment. Repeated description is thus omitted. It is noted here that a battery or electrical cell is taken as an example of the external power source **25.**

Although the present invention has been described with reference to the preferred embodiments thereof, it is apparent to those skilled in the art that a variety of modifications and changes may be made without departing from the scope of the present invention which is intended to be defined by the appended claims.

## Claims

1. A control circuit for controlling a socket in which an electrical appliance is plugged into, the socket being connected to a power source, the control circuit comprising:
a central processing unit;
a relay connected to the central processing unit and comprising a contact
connected in series between the socket and the power source;
a sensor unit connected to the central processing unit and defining a human
body detection zone for detecting a person in the detection zone to generate a human approaching signal to the central processing unit;
a current monitoring unit connected in series between the socket and the
power source to detect an electrical current flowing through the socket and correspondingly generate a current value, the current monitoring unit being connected to the central processing unit; and
a standby current setting unit connected to the central processing unit, the
standby current setting unit having an appliance standby current level;
wherein when the central processing unit receives the human approaching signal issued from the sensor unit, the central processing unit issues a first control signal to the relay to switch the contact of the relay to a closed condition; and
wherein when the central processing unit receives the current value from the current monitoring unit, the central processing unit retrieves the appliance standby current level and determines the current value maintaining equal to or smaller than the appliance standby current level for a specific period of time, the central processing unit issues a second control signal to the relay to switch the contact of the relay to an open condition.

2. The control circuit as claimed in Claim 1, wherein the current monitoring unit comprises an electrical resistor, an operational amplifier, and an analog-to-digital converter, the electrical resistor being connected in series between the socket and the power source to induce a voltage across the electrical resistor when the electrical current flows through the electrical resistor, the voltage being amplified by the operational amplifier and converted by the analog-to-digital converter into a digital form to be applied to the central processing unit.

3. The control circuit as claimed in Claim 1 further comprising a time counting unit connected to the central processing unit for operation of counting the specific period of time.

4. The control circuit as claimed in Claim 1 further comprising a display unit connected to the central processing unit for selectively displaying a numerical value of the specific period of time and the appliance standby current level.

5. The control circuit as claimed in Claim 1, wherein the sensor unit is selected from one of a pyroelectric passive infrared sensor, a sound detector, an ultrasonic sensor, an image detector, and an image temperature detector.

6. The control circuit as claimed in Claim 1, wherein the specific period of time is 10 seconds or determined by a user.

7. A control circuit for controlling a socket in which an electrical appliance is plugged into, the socket being connected to a power source, the control circuit comprising:
a central processing unit;
an additional power source supplying electrical power to the control circuit;
a relay connected to the central processing unit and having a contact
connected in series between the socket and the power source;
a sensor unit connected to the central processing unit and defining a human
body detection zone for detecting a person in the detection zone to generate a human approaching signal to the central processing unit;
a current monitoring unit connected in series between the socket and the
power source to detect an electrical current flowing through the socket and correspondingly generate a current value, the current monitoring unit being connected to the central processing unit; and
a standby current setting unit connected to the central processing unit, the
standby current setting unit having an appliance standby current level;
wherein when the central processing unit receives the human approaching signal issued from the sensor unit, the central processing unit issues a first control signal to the relay to switch the contact of the relay to a closed condition; and
wherein when the central processing unit receives the current value from the current monitoring unit, the central processing unit retrieves the appliance standby current level and determines the current value maintaining equal to or smaller than the appliance standby current level for a specific period of time, the central processing unit issues a second control signal to the relay to switch the contact of the relay to an open condition.

8. The control circuit as claimed in Claim 7, wherein the current monitoring unit comprises an electrical resistor, an operational amplifier, and an analog-to-digital converter, the electrical resistor being connected in series between the socket and the power source to induce a voltage across the electrical resistor when the electrical current flows through the electrical resistor, the voltage being amplified by the operational amplifier and converted by the analog-to-digital converter into a digital form to be applied to the central processing unit.

9. The control circuit as claimed in Claim 7, wherein the specific period of time is 10 seconds or determined by a user.

10. The control circuit as claimed in Claim 7, wherein the sensor unit is selected from one of a pyroelectric passive infrared sensor, a sound detector, an ultrasonic sensor, an image detector, and an image temperature detector.

11. The control circuit as claimed in Claim 7, wherein the additional power source comprises an electrical battery.

12. The control circuit as claimed in Claim 7 further comprising a display unit connected to the central processing unit for selectively displaying a numerical value of the specific period of time and the appliance standby current level.
